# FASCICULE DE BREVET EUROPEEN

(11) **EP 0 603 317 B1**
(45) Date de publication et mention de la délivrance du brevet: **20.11.1996**
(21) Numéro de dépôt: 92920425.3
(22) Date de dépôt: 14.09.1992
(51) Int. Cl.: F16J 15/12

(54) **JOINT PLAT, NOTAMMENT POUR MOTEUR A COMBUSTION INTERNE**
FLACHDICHTUNG INSBESONDERE FUER DIESEL- UND OTTOMOTOREN
SHEET GASKET, PARTICULARLY FOR INTERNAL COMBUSTION ENGINES

(30) Priorité: 13.09.1991 FR 9111319; 25.02.1992 FR 9202171
(43) Date de publication de la demande: 29.06.1994
(73) Titulaire: MEILLOR S.A., F-87140 Nantiat (FR)
(72) Inventeur: JEANNE, Olivier, F-87140 Chamboret (FR); MONTRESOR, Daniel, F-87140 Nantiat (FR); ULMER, Georges, F-87000 Limoges (FR)
(74) Mandataire: Polus, Camille
(86) Numéro de dépôt international: FR9200861
(87) Numéro de publication internationale: WO9306392

(56) Documents cités:
- FR-A- 693 461
- FR-A- 787 191
- FR-A- 1 333 891
- US-A- 4 234 638

## Description

La présente invention a pour objet un joint plat, notamment pour moteur à combustion interne.

En effet, les joints plats, notamment pour carter utilisés dans les moteurs à combustion interne, doivent répondre à un double besoin, celui de permettre une reprise des efforts de serrage, et celui d'assurer une étanchéité aux fluides.

Dans ce but, les joints plats existants comprennent généralement une feuille de métal qui permet la reprise des efforts et dont le profil est découpé suivant la forme du plan de joint.

La feuille est également munie de trous correspondant au passage des vis de serrage et de trous correspondant au passage des fluides.

Sur la périphérie des trous correspondant au passage des fluides, il est prévu un cordon en matériau élastomère qui assure l'étanchéité.

Un premier inconvénient important est la mauvaise tenue du cordon élastomère sur la feuille métallique.

En effet, le cordon est moulé puis solidarisé par adhérisation uniquement sur la surface intérieure du trou. Or les feuilles utilisées ont une épaisseur de quelques dixièmes de millimètres, si bien que cette surface est très réduite et bien que l'adhérisation soit importante, la liaison mécanique reste trop faible pour résister à certaines sollicitations mécaniques, vibrations ou chocs notamment.

On constate également que de tels joints présentent une étanchéité primaire réalisée à l'aide du seul cordon élastomère.

Il n'y a donc aucune étanchéité secondaire qui viendrait compléter cette étanchéité primaire, si bien que tout défaut du cordon élastomère provoque une fuite.

Aussi, afin d'essayer de remédier à cet inconvénient, on connaît des joints qui comportent dans chacun des trous une zone annulaire en saillie qui permet d'augmenter la surface d'adhérisation.

Dans certains cas, des perfectionnements prévoient de cranter cet anneau radialement pour augmenter encore la surface d'adhérisation.

Néanmoins, on constate que la liaison mécanique reste trop faible pour de nombreuses applications. D'autre part, ce type de joints ne présente aucune étanchéité secondaire.

On note également que les deux types de joints précités ne permettent aucunement de faire varier la répartition des efforts de serrage.

Aussi, certains joints de l'art antérieur proposent un empilement de feuilles revêtu d'une fine couche d'élastomère.

En périphérie des trous à étancher, les feuilles sont déformées pour réaliser un bossage.

Dans ce cas, l'étanchéité primaire est assurée par le bossage et la fine couche d'élastomère tandis que l'étanchéité secondaire est assurée par la couche d'élastomère répartie sur le plan du joint.

Par contre, l'inconvénient se situe au niveau de l'élastomère, car il est choisi dans la famille des nitriles et les épaisseurs ne peuvent être que de quelques dixièmes de millimètres et un tel matériau devient cassant en forte épaisseur.

Ce joint n'autorise également qu'une prise d'empreinte médiocre, car l'élastomère n'a pas de bonne qualité de fluage.

Aussi, les plans de joint doivent présenter un état de surface très soigné, ce qui augmente d'autant les prix de revient et qui complique la fabrication.

On connaît aussi la demande de brevet FR-A-1 333 891 qui comprend une âme métallique recouverte d'un matériau d'étanchéité et qui comprend des surépaisseurs au droit des trous à étancher. Ce joint ne comprend aucun moyen adapté pour une bonne reprise des efforts.

Afin de remédier aux inconvénients ci-dessus, l'invention a pour objet un joint plat, notamment pour moteur à combustion interne, du type comprenant, d'une part, au moins une tôle formant une armature découpée au profil du plan de joint, munie de trous à étancher, et d'autre part. une garniture monolithique en élastomère déposée et adhérisée sur les faces de la ou des tôles en formant des surépaisseurs locales d'étanchéité au droit des trous à étancher, caractérisé en ce que l'une des faces de la ou de l'une au moins des tôles est munie de butées élastiques réparties.

Selon une autre caractéristique de l'invention, les butées élastiques réparties comprennent des déformations élastiques ménagées dans la ou les tôles qui font saillie de part et d'autre de cette ou de chacune de ces tôles.

Par ailleurs, les déformations élastiques ménagées dans la ou les tôles sont symétriques par rapport au plan médian de cette ou de chacune de ces tôles.

Selon une caractéristique particulière de l'invention, l'armature comprend un empilement de tôles supersposées, l'une de ces tôles étant une tôle lisse, exempte de butée élastique et prévue pour remplir la fonction de cale.

Selon une variante de réalisation de l'invention, l'une au moins des tôles de l'armature est ajourée localement pour permettre de diminuer la raideur de ce joint au droit de cette découpe.

Par ailleurs, les tôles de l'armature ont des épaisseurs différentes.

D'autre part, la tôle ou les tôles sont préalablement écrouies, munies de lamelles et calibrées de façon à obtenir des déformations en S.

Selon une caractéristique particulière de l'invention, la garniture comprend sur l'une au moins de ses deux faces des impressions de façon à améliorer la prise d'empreintes sur les plans de joint des pièces en contact.

Selon un mode préféré de réalisation de l'invention l'élastomère possède une viscosité dynamique faible, cet élastomère étant plus particulièrement choisi dans la famille des silicones de façon à permettre le remplissage des différents interstices.

La présente invention est décrite ci-après selon un mode de réalisation particulier en regard des dessins annexés qui représentent :
- la figure 1, une vue partielle en coupe d'une tôle munie de lamelles pour la fabrication d'un joint plat selon l'invention,
- la figure 2, une vue partielle en coupe d'un joint plat selon l'invention,
- la figure 3, une vue partielle en coupe d'un joint plat selon l'invention du type multi-tôles, et
- la figure 4, une vue schématique en coupe d'un joint plat selon l'invention avec les trous de passage de vis.

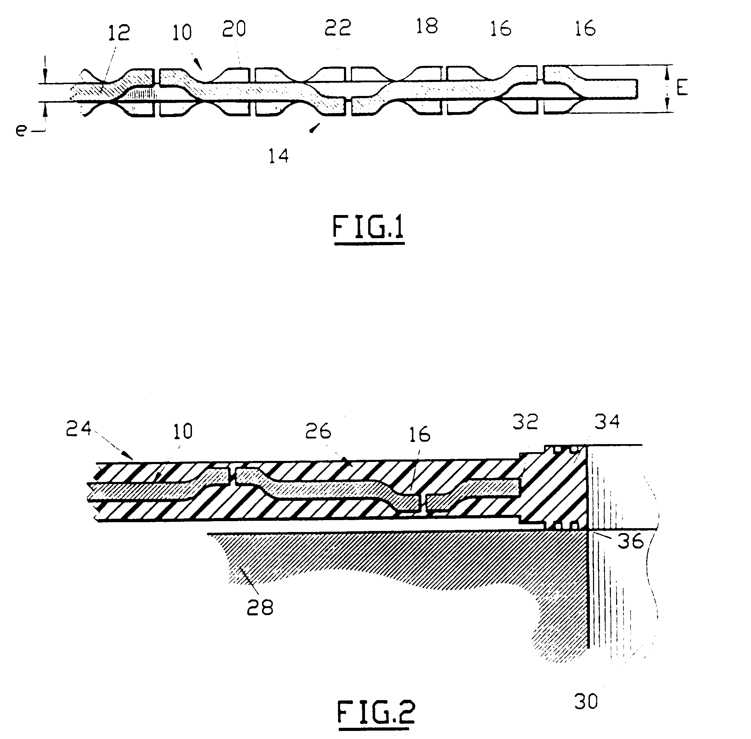

Sur la figure 1, l'armature 10 comprend une tôle 12 qui est munie de lamelles 14 qui comprennent chacune deux languettes 16 séparées par un espace 18. Les languettes ont une forme rectangulaire, vues de dessus, seul un des côtés restant lié à la tôle.

Elles sont réalisées par découpage suivi d'un pliage et d'un calibrage. On obtient ainsi le profil en S tel que représenté sur la figure 1.

Chacune des languettes de chaque lamelle est en fait un ressort à part entière.

La tôle ainsi réalisée comprend donc des butées élastiques réparties qui sont autant de ressorts de rappel.

On remarque également que les lamelles sont en saillie de part et d'autre de la tôle et elles sont symétriques par rapport au plan médian de la tôle.

Sur cette figure 1, les lamelles 20 et 22 représentées en trait plein sont les lamelles qui se situent derrière la première rangée. Ces lamelles sont en effet disposées en quinconce.

Si l'on appelle e l'épaisseur initiale de la tôle cette épaisseur devient l'épaisseur libre E après réalisation des lamelles.

Sur la figure 2, on a représenté le joint proprement dit 24, qui est noyé dans une matrice 26 en élastomère. La pièce sur laquelle est monté le joint est référencée 28 et le trou à étancher 30.

La matrice 26 en élastomère se prolonge au droit de l'extrémité 32 de la tôle par un cordon 34 en surépaisseur.

La matrice et le cordon sont parfaitement monolithiques, sans aucune discontinuité.

De façon connue, il est ménagé des rainures 36 sur le cordon.

L'élastomère retenu est choisi de préférence parmi les silicones ou pour le moins parmi des élastomères ayant une viscosité dynamique faible, de façon que, lors de la mise en place et grâce au fluage, cet élastomère vienne remplir tous les interstices.

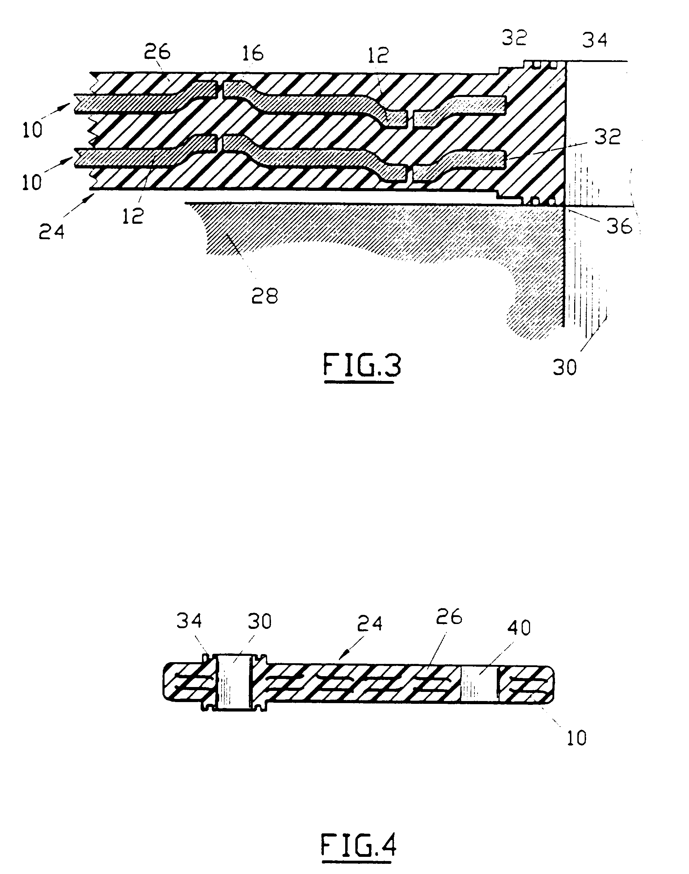

Sur la figure 3, le joint 24 représenté comprend deux tôles 10 superposées. L'ensemble est noyé dans une matrice 26 en élastomère tout comme dans le mode de réalisation de la figure 1.

Sur la figure 4, le joint comprend deux tôles superposées, schématiquement représentées, ainsi qu'un trou 40 correspondant au passage de vis.

De nombreuses variantes peuvent être envisagées à partir des modes de réalisation qui viennent d'être décrits.

En effet l'élastomère peut comprendre des impressions ménagées à sa surface, ce qui améliore la prise d'empreinte. Ainsi l'état de surface des plans de joints nécessite un degré moindre d'usinage.

Par ailleurs, le joint plat réalisé suivant l'invention à partir d'une armature multi-tôles conduit à une bonne répartition des efforts sur toute la surface du joint.

De plus, non seulement la répartition est bonne mais il est possible de la faire varier localement pour tenir compte de certaines zones soumises à des pressions plus importantes. Pour cela il suffit supprimer une partie de l'une des tôles constituant l'armature à l'endroit où l'on souhaite diminuer la pression.

Les avantages du joint plat selon l'invention sont nombreux.

Tout d'abord la résistance mécanique de la liaison des cordons sur l'armature est excellente compte tenu du fait que les cordons sont liés avec la matrice en élastomère puisqu'ils sont venus de moulage avec cette matrice.

Ensuite le joint plat selon l'invention présente une double étanchéité avec un chemin de fuite maximum. En effet, en plus de l'étanchéité obtenue à la périphérie de chaque trou avec les cordons, il y a une étanchéité secondaire constituée par la couche d'élastomère qui recouvre toute la surface du joint, et de par la nature même du matériau l'étanchéité à coeur est excellente.

Un tel joint résiste également très bien à la chaleur ceci autorise des applications pour des fluides à haute température tels que ceux des circuits d'huile dans les moteurs à combustion interne.

Un autre avantage de ce joint est celui de permettre une adaptation aisée grâce à sa possibilité de modification de hauteur. Pour obtenir des hauteurs différentes il suffit d'introduire entre les tôles munies de lamelles des tôles lisses qui font office de cales. Comme ces tôles peuvent être choisies avec des variations d'épaisseur faible, le pas de progression en hauteur est fin, d'où une bonne adaptabilité.

Dans certaines applications, les joints de différentes épaisseurs se distinguent par leurs couleurs car l'élastomère est mélangé à des colorants suivant un code de couleurs préalablement déterminé.

Une autre application de tels joints plats concerne les bouchons de vidange.

En effet, la double étanchéité est particulièrement avantageuse dans ce cas.

De plus, grâce à l'une des tôles de l'armature, on peut assurer un centrage très précis du joint sur le bouchon.

## Revendications

1. Joint plat, notamment pour moteur à combustion interne, du type comprenant, d'une part, au moins une tôle (12) formant une armature (10) découpée au profil du plan de joint, munie de trous à étancher (30), et d'autre part, une garniture (26) monolithique en élastomère déposée et adhérisée sur les faces de la ou des tôles en formant des surépaisseurs (34) locales d'étanchéité au droit des trous (30) à étancher, caractérisé en ce que l'une des faces de la ou de l'une au moins des tôles (12) est munie de butées élastiques réparties (16).

2. Joint plat selon la revendication 1, caractérisé en ce que les butées élastiques réparties (16) comprennent des déformations élastiques ménagées dans la ou les tôles qui font saillie de part et d'autre de cette ou de chacune de ces tôles.

3. Joint plat selon la revendication 2, caractérisé en ce que les déformations élastiques ménagées dans la ou les tôles sont symétriques par rapport au plan médian de cette ou de chacune de ces tôles.

4. Joint plat selon l'une quelconque des revendications précédentes, caractérisé en ce que l'armature (10) comprend un empilement de tôles (12) superposées, l'une des tôles étant une tôle lisse, exempte de butée élastique et prévue pour remplir la fonction de cale.

5. Joint plat selon l'une quelconque des revendications précédentes, caractérisé en ce que l'une au moins des tôles (12) de l'armature (10) est ajourée localement pour diminuer la raideur de ce joint au droit de cette découpe.

6. Joint plat selon l'une quelconque des revendications précédentes, caractérisé en ce que, dans le cas d'un empilement de plusieurs tôles, les tôles (12) de l'armature (10) ont des épaisseurs différentes.

7. Joint plat selon l'une quelconque des revendications précédentes, caractérisé en ce que la tôle ou les tôles (12) sont préalablement écrouies, munies de lamelles et calibrées de façon à obtenir des déformations en S.

8. Joint plat selon l'une quelconque des revendications précédentes, caractérisé en ce que la garniture comprend sur l'une au moins de ses deux faces des impressions de façon à améliorer la prise d'empreintes sur les plans de joint des pièces en contact.

9. Joint plat selon l'une quelconque des revendications précédentes, caractérisé en ce que l'élastomère possède une viscosité dynamique faible, cet élastomère étant plus particulièrement choisi dans la famille des silicones de façon à permettre le remplissage des différents interstices.

## Patentansprüche

1. Flachdichtung, welche insbesondere fürfür Verbrennungsmotoren eingesetzt wird, von der Art, welche einerseits mindestens ein eine Armatur (10) bildendes Blech (12) aufweist, welches entsprechend dem Profil der Dichtfläche zugeschnitten ist, und mit drei abzudichtenden Bohrungen (30) ausgestattet ist, und andererseits eine monolithische Garnitur (26) aus einem Elastomer enthält, welches auf die Flächen des oder der Bleche aufgetragen und daran befestigt ist und lokale Überdicken (34) der Abdichtung an den abzudichtenden Bohrungen (30) bildet,
**dadurch gekennzeichnet, daß**
eine der Fläschen mindestens eines der Bleche (12) mit verteilt angeordneten elastischen Drucklagern (16) ausgestattet ist.

2. Flachdichtung nach Anspruch 1,
**dadurch gekennzeichnet, daß**
die verteilt angeordneten elastischen Drucklager (16) elastische Formänderungen aufweisen, welche in das oder die Bleche eingebracht sind und auf beiden Seiten des oder Bleche hervorstehen.

3. Flachdichtung nach Anspruch 2,
**dadurch gekennzeichnet, daß**
die in das oder die Bleche eingebrachten elastischen Formänderungen symmetrisch zur mittleren Ebene des oder dieser Bleche verlaufen.

4. Flachdichtung nach einem der vorausgegangenen Ansprüche,
**dadurch gekennzeichnet, daß**
die Armatur (10) eine Stapelung von übereinandergelegten Blechen (12) aufweist, wobei eines dieser Bleche ein glattes Blech ist, welches kein elastisches Drucklager aufweist und dafür Vorgesehen ist, als Beilagschelbe zü dienen.

5. Flachdichtung nach einem der vorausgegangenen Ansprüche,
**dadurch gekennzeichnet, daß**
mindestens eines der Bleche (12) der Aramatur (10) lokal durchbrochen ist, um die Steifigkeit der Dichsung an diesem Ausschnitt zu verringern.

6. Flachdichtung nach einem der vorausgegangenen Ansprüche,
**dadurch gekennzeichnet, daß**
bei einer Stapelung von mehreren Blechen die Bleche (12) der Armatur (10) unterschiedliche Dicken haben.

7. Flachdichtung nach einem der vorausgegangenen Ansprüche,
**dadurch gekennzeichnet, daß**
das oder die Bleche (12) hart geschmiedet, mit Lamellen versehen und kalibriert werden, um auf diese Weise S-förmige Verformungen zu erreichen.

8. Flachdichtung nach einem der vorausgegangenen Ansprüche,
**dadurch gekennzeichnet, daß**
die Garnitur auf mindestens einer ihrer beiden Flächen Vertiefungen enthält, um den Eingriff der in Berührung stehenden Teile auf den Dichtflächen zu verbesern.

9. Flachdichtung nach einem der vorausgegangenen Ansprüche,
**dadurch gekennzeichnet, daß**
das Elastomer eine geringe dynamische Viskosität besitzt und dieses Elastomer vorzugsweise aus der Familie der Silikone ausgewählt wird, um das Ausfüllen der verschiedenen Zwischenräume zu ermöglichen.

## Claims

1. Flat joint, notably for an internal combustion engine, of the type comprising on the one hand at least one metal sheet (12) forming a framework (10) cut out in the profile of the joint plane, provided with holes to be sealed (30) and on the other hand a solid elastomeric lining (26) placed and stuck to the surfaces of the metal sheet or sheets to form locally thickened sealing areas (34) aligned with the holes (30) which are to be sealed, characterised in that one of the sides of the or each metal sheets (12) is provided with spread out elastic abutments (16).

2. Flat joint according to claim 1, characterised in that the spread out elastic abutments (16) comprise elastic deformations formed in the or each metal sheets which project on each side of the or each metal sheet.

3. Flat joint according to claim 2, characterised in that the elastic deformations formed in the or each metal sheet are symmetrical with respect to the median plane of this or each sheet.

4. Flat joint according to any one of the preceding claims, characterised in that the framework (10) comprises a stack of superimposed sheets (12), one of the sheets being a smooth sheet free from elastic abutments and intended to act as a wedge.

5. Flat joint according to any one of the preceding claims, characterised in that at least one of the metal sheets (12) of the framework (10) is locally cut away to reduce the rigidity of this joint in line with this cutout.

6. Flat joint according to any one of the preceding claims, characterised in that, in the case of a stack of a plurality of metal sheets, the sheets (12) of the framework (10) have different thicknesses.

7. Flat joint according to any one of the preceding claims, characterised in that the metal sheet or sheets (12) are previously cold-hardened, fitted with fins and calibrated so as to obtain S-shaped deformations.

8. Flat joint according to any one of the preceding claims, characterised in that the lining has impressions on at least one of its two sides so as to improve the grip of stamps on the joint planes of the components in contact.

9. Flat joint according to any one of the preceding claims, characterised in that the elastomer has a low dynamic viscosity, this elastomer being selected more particularly from the family of silicones in order to allow the various interstices to be filled.
